# EUROPEAN PATENT APPLICATION

(11) **EP 4 814 872 A1**
(43) Date of publication of application: **30.09.2026**
(21) Application number: 24893493.7
(22) Date of filing: 20.11.2024
(51) Int. Cl.: G06T 11/00

(54) **IMAGE REPRODUCTION METHOD AND DEVICE**

(30) Priority: 21.11.2023 CN 202311561773
(71) Applicant: Leica Microsystems CMS GmbH, 35578 Wetzlar (DE)
(72) Inventor: JIAO, Linqi, Suzhou, Jiangsu 215000 (CN)
(74) Representative: Paustian & Partner Patentanwälte mbB
(86) International application number: PCT/CN2024/133346
(87) International publication number: WO 2025/108337

(57) **Abstract**

The present disclosure provides an image reproduction method, apparatus, and storage medium, the method comprising: the acquisition of the first metadata corresponding to a first image, wherein said first image is composed of more than one single-channel image, while said first metadata comprises parameter information respectively corresponding to said more than one single-channel image and image processing information corresponding to said first image; the respective acquisition for a sample to be observed of more than one single-channel image corresponding to said sample to be observed based on the parameter information respectively corresponding to said more than one single-channel image; the superposition of more than one single-channel image corresponding to said sample to be observed to generate a second image corresponding to said sample to be observed; and the performance of image processing on said second image based on said image processing information so that it is possible to automatically acquire a corresponding superimposed image for the sample to be observed based on the current superimposed image.

## Description

### Cross-Reference Related to the Application

The present disclosure is filed based on Chinese Patent Application No. 202311561773.2, filed on November 21, 2023, and claims priority to this Chinese patent application, the entire content of which is incorporated herein as reference.

### Technical Field

The present disclosure relates to image processing technology, and in particular, to an image reproduction method and apparatus.

### Background Art

With the development of image processing and analysis technology, superimposed images composed of a plurality of single-channel images have become mainstream. For example, during observation of a sample, a plurality of single-channel images of the sample are usually acquired, and the plurality of single-channel images are superimposed to acquire a superimposed image so that an operator can observe the sample using the superimposed image easily.

### Summary of the Invention

An embodiment of a first aspect of the present disclosure provides an image reproduction method, with said method comprising: the acquisition of the first metadata corresponding to a first image, wherein said first image is composed of more than one single-channel image, while said first metadata comprises parameter information respectively corresponding to said more than one single-channel image and image processing information corresponding to said first image; the respective acquisition for a sample to be observed of more than one single-channel image corresponding to said sample to be observed based on the parameter information respectively corresponding to said more than one single-channel image; the superposition of more than one single-channel image corresponding to said sample to be observed to generate a second image corresponding to said sample to be observed; and the performance of image processing on said second image based on image processing information corresponding to said first image.

Optionally, said first metadata information further comprises image processing information respectively corresponding to one or more single-channel images constituting said first image, and before synthesizing more than one single-channel image corresponding to said sample to be observed, said method further comprises: the performance of image processing on one or more single-channel images respectively corresponding to said sample to be observed based on image processing information respectively corresponding to one or more single-channel images constituting said first image.

Optionally, said image processing comprises artificial intelligence (AI) analysis, and said image processing information comprises an AI analysis goal and information about an AI analysis tool, with the performance of image processing based on said image processing information comprising: the acquisition of said AI analysis tool according to said information about the AI analysis tool; and the use of said AI analysis tool to perform image processing to realize said AI analysis goal.

Optionally, said AI analysis tool comprises one or more AI analysis models; and said information about the AI analysis tool comprises at least one of the following: information for acquiring each AI analysis model; each AI analysis model.

Optionally, said information about the AI analysis tool further comprises feature information of each AI analysis model.

Optionally, said AI analysis tool comprises a plurality of AI analysis models; and after acquiring said AI analysis tool according to said information about the AI analysis tool, the method further comprises: the determination of a target AI analysis model from said plurality of AI analysis models; said use of the AI analysis tool to perform image processing to realize the AI analysis goal comprises: the use of said target AI analysis model to perform image processing to realize said AI analysis goal.

Optionally, said determination of a target AI analysis model from said plurality of AI analysis models comprises: the reception of an AI analysis demand that is input by a user; and the determination of said target AI analysis model according to said AI analysis demand and the feature information of each AI analysis model.

Optionally, said determination of a target AI analysis model from said plurality of AI analysis models comprises: the display of information about said plurality of AI analysis models; and the determination of the target AI analysis model from said plurality of AI analysis models based on a selection input from a user.

Optionally, said AI analysis goal comprises at least one of the following: determination of cell confluence; determination of cell count; or determination of cell transfection rate.

Optionally, before the respective acquisition for a sample to be observed of more than one single-channel image corresponding to said sample to be observed based on the parameter information respectively corresponding to said more than one single-channel image, the method further comprises: the output of a first prompt, wherein said first prompt is used to prompt a user to confirm whether to generate said second image for said sample to be observed;and the reception of a first instruction, wherein said first instruction instruct the user to confirm the generation of said second image for said sample to be observed.

Optionally, the respective acquisition for a sample to be observed of more than one single-channel image corresponding to said sample to be observed based on the parameter information respectively corresponding to said more than one single-channel image comprises: the adjustment of parameter settings of an image generation device for each single-channel image constituting said first image based on the parameter information corresponding to said single-channel images; and the use of the adjusted image generation device to acquire single-channel images corresponding to said sample to be observed.

Optionally, before the adjustment of the parameter settings of the image generation device, said method further comprises: the determination of whether the parameter settings of said image generation device can be adjusted based on the parameter information corresponding to said single-channel images; and the adjustment of said parameter settings of the image generation device based on the parameter information corresponding to said single-channel images, which comprises: the adjustment of the parameter settings of said image generation device based on the parameter information corresponding to said single-channel images when the parameter settings of said image generation device can be adjusted.

Optionally, said method further comprises: the output of a second prompt when the parameter settings of said image generation device cannot be adjusted, wherein the second prompt is used to indicate to a user the parameters of said image generation device that could not be automatically adjusted.

Optionally, said second prompt further comprises guidance information for guiding a user to manually adjust said parameters that could not be automatically adjusted.

Optionally, said image generation device comprises a microscope and a camera, and the parameter information comprises at least one of imaging mode, microscope parameters, and shooting parameters; the determination of whether the parameter settings of said image generation device can be adjusted comprises at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

Optionally, before the use of the adjusted image generation device to acquire single-channel images corresponding to said sample to be observed, said method further comprises: the reception of a second instruction, wherein saidsecond instruction indicates that the parameter settings of said image generation device have been successfully adjusted.

Optionally, before the use of the adjusted image generation device to acquire single-channel images corresponding to said sample to be observed, said method further comprises: the determination of whether the parameter settings of said image generation device have taken effect; the use of said adjusted image generation device to acquire single-channel images corresponding to said sample to be observed, which comprises: the use of the adjusted image generation device to acquire the single-channel images corresponding to said sample to be observed after the parameter settings of said image generation device have taken effect.

Optionally, said method further comprises: Store parameter information respectively corresponding to said more than one single-channel image and image processing information corresponding to the second image as the second metadata corresponding to said second image.

Optionally, said method further comprises: Store parameter information respectively corresponding to said more than one single-channel image, image processing information corresponding to said second image, and image processing information respectively corresponding to one or more single-channel images constituting said second image as the second metadata corresponding to said second image.

An embodiment of a second aspect of the present disclosureproposes an image reproduction method, with said method comprising: the acquisition of the first metadata corresponding to a first image, wherein said first image is composed of more than one single-channel image, while said first metadata comprises parameter information respectively corresponding to said more than one single-channel image and image processing information respectively corresponding to one or more single-channel images constituting said first image; the respective acquisition for a sample to be observed of more than one single-channel image corresponding to said sample to be observed based on the parameter information respectively corresponding to said more than one single-channel image; the performance of image processing on one or more single-channel images respectively corresponding to said sample to be observed based on image processing information respectively corresponding to one or more single-channel images constituting said first image; and the superposition of more than one single-channel image corresponding to said sample to be observed to generate a second image corresponding to said sample to be observed.

Optionally, said image processing comprises artificial intelligence (AI) analysis, and said image processing information comprises an AI analysis goal and information about an AI analysis tool, with the performance of image processing based on said image processing information comprising: the acquisition of said AI analysis tool according to said information about the AI analysis tool; and the use of said AI analysis tool to perform image processing to realize said AI analysis goal.

Optionally, said AI analysis tool comprises one or more AI analysis models; and said information about the AI analysis tool comprises at least one of the following: information for acquiring each AI analysis model; each AI analysis model.

Optionally, said information about the AI analysis tool further comprises feature information of each AI analysis model.

Optionally, said AI analysis tool comprises a plurality of AI analysis models; and after acquiring said AI analysis tool according to said information about the AI analysis tool, the method further comprises: the determination of a target AI analysis model from said plurality of AI analysis models; said use of the AI analysis tool to perform image processing to realize the AI analysis goal comprises: the use of said target AI analysis model to perform image processing to realize said AI analysis goal.

Optionally, said determination of a target AI analysis model from said plurality of AI analysis models comprises: the reception of an AI analysis demand that is input by a user; and the determination of said target AI analysis model according to said AI analysis demand and the feature information of each AI analysis model.

Optionally, said determination of a target AI analysis model from said plurality of AI analysis models comprises: the display of information about said plurality of AI analysis models; and the determination of the target AI analysis model from said plurality of AI analysis models based on a selection input from a user.

Optionally, said AI analysis goal comprises at least one of the following: determination of cell confluence; determination of cell count; or determination of cell transfection rate.

Optionally, before the respective acquisition for a sample to be observed of more than one single-channel image corresponding to said sample to be observed based on the parameter information respectively corresponding to said more than one single-channel image, the method further comprises: the output of a first prompt, wherein said first prompt is used to prompt a user to confirm whether to generate said second image for said sample to be observed; and the reception of a first instruction, wherein said first instruction instruct the user to confirm the generation of said second image for said sample to be observed.

Optionally, the respective acquisition for a sample to be observed of more than one single-channel image corresponding to said sample to be observed based on the parameter information respectively corresponding to said more than one single-channel image comprises: the adjustment of parameter settings of an image generation device for each single-channel image constituting said first image based on the parameter information corresponding to said single-channel images; and the use of the adjusted image generation device to acquire single-channel images corresponding to said sample to be observed.

Optionally, before the adjustment of the parameter settings of the image generation device, said method further comprises: the determination of whether the parameter settings of said image generation device can be adjusted based on the parameter information corresponding to said single-channel images; and the adjustment of said parameter settings of the image generation device based on the parameter information corresponding to said single-channel images, which comprises: the adjustment of the parameter settings of said image generation device based on the parameter information corresponding to said single-channel images when the parameter settings of said image generation device can be adjusted.

Optionally, said method further comprises: the output of a second prompt when the parameter settings of said image generation device cannot be adjusted, second prompt, wherein said second prompt is used to indicate to a user the parameters of said image generation device that could not be automatically adjusted.

Optionally, said secondprompt further comprises guidance information for guiding a user to manually adjust said parameters that could not be automatically adjusted.

Optionally, said image generation device comprises a microscope and a camera, and the parameter information comprises at least one of imaging mode, microscope parameters, and shooting parameters; the determination of whether the parameter settings of said image generation device can be adjusted comprises at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

Optionally, before the use of the adjusted image generation device to acquire single-channel images corresponding to said sample to be observed, said method further comprises: the reception of a second instruction, wherein said second instruction indicates that the parameter settings of said image generation device have been successfully adjusted.

Optionally, before the use of the adjusted image generation device to acquire single-channel images corresponding to said sample to be observed, said method further comprises: the determination of whether the parameter settings of said image generation device have taken effect; the use of said adjusted image generation device to acquire single-channel images corresponding to said sample to be observed, which comprises: the use of the adjusted image generation device to acquire the single-channel images corresponding to said sample to be observed after the parameter settings of said image generation device have taken effect.

Optionally, said method further comprises: Store parameter information respectively corresponding to said more than one single-channel image, image processing information corresponding to said second image, and image processing information respectively corresponding to one or more single-channel images constituting said second image as the second metadata corresponding to said second image.

An embodiment of a third aspect of the present disclosure provides an image reproduction apparatus, with said apparatus comprising: a first acquisition module for acquiring the first metadata corresponding to a first image, wherein said first image is composed of more than one single-channel image, while said first metadata comprises parameter information respectively corresponding to said more than one single-channel image and image processing information corresponding to said first image; a second acquisition module for acquiring a sample to be observed of more than one single-channel image corresponding to said sample to be observed based on the parameter information respectively corresponding to said more than one single-channel image; a generation module for superposition of more than one single-channel image corresponding to said sample to be observed to generate a second image corresponding to said sample to be observed; and a processing module for performing image processing on said second image based on image processing information corresponding to said first image.

Optionally, said first metadata information further comprises image processing information respectively corresponding to one or more single-channel images constituting said first image, and said processing module is further used for: the performance of image processing on one [or] more single-channel images respectively corresponding to said sample to be observed based on image processing information respectively corresponding to one or more single-channel images constituting said first image.

Optionally, said image processing comprises artificial intelligence (AI) analysis, and said image processing information comprises an AI analysis goal and information about an AI analysis tool, while said processing module is used for: the acquisition of said AI analysis tool according to said information about the AI analysis tool; and the use of said AI analysis tool to perform image processing to realize said AI analysis goal.

Optionally, said AI analysis tool comprises one or more AI analysis models; and said information about the AI analysis tool comprises at least one of the following: information for acquiring each AI analysis model; each AI analysis model.

Optionally, said information about the AI analysis tool further comprises feature information of each AI analysis model.

Optionally, the AI analysis tool comprises a plurality of AI analysis models; said apparatus further includes: a determination module, used for the determination of the target AI analysis model from said plurality of AI analysis models; while said processing module is used for: the use of said target AI analysis model to perform image processing to realize said AI analysis goal.

Optionally, said determination module is used for: the reception of an AI analysis demand that is input by a user; and the determination of said target AI analysis model according to said AI analysis demand and the feature information of each AI analysis model.

Optionally, said determination module is used for: the display of information about said plurality of AI analysis models; and the determination of the target AI analysis model from said plurality of AI analysis models based on a selection input from a user.

Optionally, said AI analysis goal comprises at least one of the following: determination of cell confluence; determination of cell count; or determination of cell transfection rate.

Optionally, said apparatus further comprises: a transceiver module: for the output of a first prompt, wherein said first prompt is used to prompt a user to confirm whether to generate said second image for said sample to be observed; and for the reception of a first instruction, wherein said first instruction instruct the user to confirm the generation of said second image for said sample to be observed.

Optionally, said second acquisition module comprises: an adjustment unit, used for the adjustment of parameter settings of an image generation device for each single-channel image constituting said first image based on the parameter information corresponding to said single-channel images; and an acquisition unit, used for the use of the adjusted image generation device to acquire single-channel images corresponding to said sample to be observed.

Optionally, said second The acquisition module also comprises: a first determination unit, used for the determination of whether the parameter settings of said image generation device can be adjusted based on the parameter information corresponding to said single-channel images; and said adjustment unit, used for the adjustment of the parameter settings of said image generation device based on the parameter information corresponding to said single-channel images when the parameter settings of said image generation device can be adjusted.

Optionally, said second acquisition module further comprises: an output unit, for the output of a second prompt when the parameter settings of said image generation device cannot be adjusted, wherein said second prompt is used to indicate to a user the parameters of said image generation device that could not be automatically adjusted.

Optionally, said second prompt further comprises guidance information for guiding a user to manually adjust said parameters that could not be automatically adjusted.

Optionally, said image generation device comprises a microscope and a camera, and the parameter information comprises at least one of imaging mode, microscope parameters, and shooting parameters; and said first determination unit is used for the execution of at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

Optionally, said second acquisition module further comprises: a receiving unit for the reception of a second instruction, wherein said second instruction indicates that the parameter settings of said image generation device have been successfully adjusted.

Optionally, said second The acquisition module also comprises: a second determination unit, used for the determination of whether the parameter settings of said image generation device have taken effect; said second acquisition module is used for the use of the adjusted image generation device to acquire the single-channel images corresponding to said sample to be observed after the parameter settings of said image generation device have taken effect.

Optionally, said apparatus further comprises: a storage module for storing parameter information respectively corresponding to said more than one single-channel image and image processing information corresponding to said second image as the second metadata corresponding to said second image.

Optionally, said apparatus further comprises: a storage module for storing parameter information respectively corresponding to said more than one single-channel image, image processing information corresponding to said second image, and image processing information respectively corresponding to one or more single-channel images constituting said second image as the second metadata corresponding to said second image.

An embodiment of a fourth aspect of the present disclosure provides an image reproduction apparatus, with said apparatus comprising: a first acquisition module for acquiring the first metadata corresponding to a first image, wherein said first image is composed of more than one single-channel image, while said first metadata comprises parameter information respectively corresponding to said more than one single-channel image and image processing information respectively corresponding to one or more single-channel images constituting said first image; a second acquisition module for acquiring a sample to be observed of more than one single-channel image corresponding to said sample to be observed based on the parameter information respectively corresponding to said more than one single-channel image; a processing module for performing image processing on one or more single-channel images respectively corresponding to said sample to be observed based on image processing information respectively corresponding to one or more single-channel images constituting said first image; and a generation module for superposition of more than one single-channel image corresponding to said sample to be observed to generate a second image corresponding to said sample to be observed;

Optionally, said image processing comprises artificial intelligence (AI) analysis, and said image processing information comprises an AI analysis goal and information about an AI analysis tool, while said processing module is used for: the acquisition of said AI analysis tool according to said information about the AI analysis tool; and the use of said AI analysis tool to perform image processing to realize said AI analysis goal.

Optionally, said AI analysis tool comprises one or more AI analysis models; and said information about the AI analysis tool comprises at least one of the following: information for acquiring each AI analysis model; each AI analysis model.

Optionally, said information about the AI analysis tool further comprises feature information of each AI analysis model.

Optionally, the AI analysis tool comprises a plurality of AI analysis models; said apparatus further includes: a determination module, used for the determination of the target AI analysis model from said plurality of AI analysis models; while said processing module is used for: the use of said target AI analysis model to perform image processing to realize said AI analysis goal.

Optionally, said determination module is used for: the reception of an AI analysis demand that is input by a user; and the determination of said target AI analysis model according to said AI analysis demand and the feature information of each AI analysis model.

Optionally, said determination module is used for: the display of information about said plurality of AI analysis models; and the determination of the target AI analysis model from said plurality of AI analysis models based on a selection input from a user.

Optionally, said AI analysis goal comprises at least one of the following: determination of cell confluence; determination of cell count; or determination of cell transfection rate.

Optionally, said apparatus further comprises: a transceiver module: for the output of a first prompt, wherein said first prompt is used to prompt a user to confirm whether to generate said second image for said sample to be observed; and for the reception of a first instruction, wherein said first instruction instruct the user to confirm the generation of said second image for said sample to be observed.

Optionally, said second acquisition module comprises: an adjustment unit, used for the adjustment of parameter settings of an image generation device for each single-channel image constituting said first image based on the parameter information corresponding to said single-channel images; and an acquisition unit, used for the use of the adjusted image generation device to acquire single-channel images corresponding to said sample to be observed.

Optionally, said second The acquisition module also comprises: a first determination unit, used for the determination of whether the parameter settings of said image generation device can be adjusted based on the parameter information corresponding to said single-channel images; and said adjustment unit, used for the adjustment of the parameter settings of said image generation device based on the parameter information corresponding to said single-channel images when the parameter settings of said image generation device can be adjusted.

Optionally, said second acquisition module further comprises: an output unit, for the output of a second prompt when the parameter settings of said image generation device cannot be adjusted, wherein said second prompt is used to indicate to a user the parameters of said image generation device that could not be automatically adjusted.

Optionally, said second prompt further comprises guidance information for guiding a user to manually adjust said parameters that could not be automatically adjusted.

Optionally, said image generation device comprises a microscope and a camera, and the parameter information comprises at least one of imaging mode, microscope parameters, and shooting parameters; and said first determination unit is used for the execution of at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

Optionally, said second acquisition module further comprises: a receiving unit for the reception of a second instruction, wherein said second instruction indicates that the parameter settings of said image generation device have been successfully adjusted.

Optionally, said second The acquisition module also comprises: a second determination unit, used for the determination of whether the parameter settings of said image generation device have taken effect; said second acquisition module is used for the use of the adjusted image generation device to acquire the single-channel images corresponding to said sample to be observed after the parameter settings of said image generation device have taken effect.

Optionally, said apparatus further comprises: a storage module for storing parameter information respectively corresponding to said more than one single-channel image, image processing information corresponding to said second image, and image processing information respectively corresponding to one or more single-channel images constituting said second image as the second metadata corresponding to said second image.

An embodiment of a fifth aspect of the present disclosure provides an image reproduction apparatus, which comprises: a processor; and a memory, used for the storage of instructions executable by said processor; wherein, when said instructions are executed by said processor, said processor is used for the execution of the image reproduction method according to the embodiment of the first aspect or the second aspect described above.

An embodiment of a sixth aspect of the present disclosure provides a computer-readable storage medium with instructions stored thereon, and when said instructions are being executed by the processor, said image reproduction method described in the first or second aspect embodiment above can be implemented.

An embodiment of the present disclosure provides an image reproduction method and apparatus. By obtaining first metadata corresponding to the first image, for a sample to be observed, based on the parameter information included in the first metadata information corresponding to more than one single-channel image constituting the first image, more than one single-channel images corresponding to the sample to be observed are obtained respectively, which are then superimposed to generate a second image corresponding to the sample to be observed; and for said second image, image processing is performed based on the image processing information included in the first metadata. Based on the current superimposed image (i.e., the first image), a corresponding superimposed image (i.e., the second image) can be automatically acquired for the sample to be observed. Since the plurality of single-channel images constituting the newly generated superimposed image are acquired in the same manner as the plurality of single-channel images constituting the current superimposed image and since the newly generated superimposed image is processed in the same image processing manner as the current superimposed image, the newly generated superimposed image has the same image quality as the current superimposed image and is expected to have a similar image processing effect. Thus, the present disclosure provides a technical solution that enables a user to reproduce a superimposed image with the same image quality for a sample to be observed and acquire a desired image processing result based on an existing superimposed image.

Additional aspects and advantages of the present disclosure will be given in part in the following description and part will become apparent from the following description or may be learned by practice of the present disclosure.

### Brief Description of the Drawings

The above and/or additional aspects and advantages of the present disclosure will become apparent and easy to understand from the following description of embodiments with reference to the attached drawings, in which:
FIG. 1 is a schematic flowchart of an image reproduction method according to an embodiment of the present disclosure;
FIG. 2 is a schematic flowchart of another image reproduction method according to an embodiment of the present disclosure;
FIG. 3 is a schematic flowchart of another image reproduction method according to an embodiment of the present disclosure;
FIG. 4 is a schematic flowchart of another image reproduction method according to an embodiment of the present disclosure;
FIG. 5 is a schematic flowchart of another image reproduction method according to an embodiment of the present disclosure;
FIG. 6 is a schematic structural diagram of an image reproduction apparatus provided by an embodiment of the present disclosure;
FIG. 7 is a schematic structural diagram of another image reproduction apparatus provided by an embodiment of the present disclosure;
FIG. 8 is a schematic structural diagram of another image reproduction apparatus provided by an embodiment of the present disclosure;
FIG. 9 is a schematic structural diagram of another image reproduction apparatus provided by an embodiment of the present disclosure;
FIG. 10 is a schematic structural diagram of an image reproduction apparatus provided by an embodiment of the present disclosure;
FIG. 11 is a schematic structural diagram of another image reproduction apparatus provided by an embodiment of the present disclosure;
FIG. 12 is a schematic structural diagram of another image reproduction apparatus provided by an embodiment of the present disclosure;
FIG. 13 is a schematic structural diagram of another image reproduction apparatus provided by an embodiment of the present disclosure;
FIG. 14 is a schematic structural diagram of a system for realizing an image reproduction method provided by an embodiment of the present disclosure.

### Specific Embodiments

Embodiments of the present disclosure are described in detail below, and examples of said embodiments are shown in the attached drawings, wherein the same or similar reference numerals throughout denote the same or similar elements or elements having the same or similar functions. The embodiments described below with reference to the attached drawings are exemplary and intended to explain the present disclosure and should not be construed as a limitation on the present disclosure.

It should be noted that the terms "first," "second," etc. in the Specification and Claim 15 of the present disclosure and in the aforementioned attached drawingsare used to distinguish between similar objects and are not necessarily used to describe a specific order or sequence. It should be understood that the data so used may be interchanged under appropriate circumstances so that the embodiments of the present disclosure described herein can be implemented in an order other than those illustrated or described herein. The embodiments described in the following exemplary embodiments do not represent all embodiments consistent with the present disclosure. On the contrary, they are merely examples of the apparatuse and method consistent with some aspects of the present disclosure as detailed in the attached Claim 15.

With the development of image processing and analysis technology, superimposed images composed of a plurality of single-channel images have become mainstream. For example, during observation of a sample, a plurality of single-channel images of the sample are usually acquired, and the plurality of single-channel images are superimposed to acquire a superimposed image so that an operator can acquire sufficient information from the superimposed image. In the prior art, in order to acquire a superimposed image, a user first needs to acquire each single-channel image and then perform superimposition to acquire the superimposed image. This requires the user to understand the various parameters used by the image generation device when acquiring each single-channel image and to perform various complex setting operations to acquire each single-channel image.

To this end, the present application provides an image reproduction method, apparatus, and computer-readable storage medium used for simply and automatically generating a superimposed image with the same image quality for a sample to be observed and acquiring a desired image processing result based on an existing superimposed image so that the user does not need to understand the various parameters used by the image generation device when acquiring each single-channel image or perform complex setting operations to acquire the desired image processing result.

The image reproduction method and apparatus provided by the present application will be described in detail below with reference to the attached drawings.

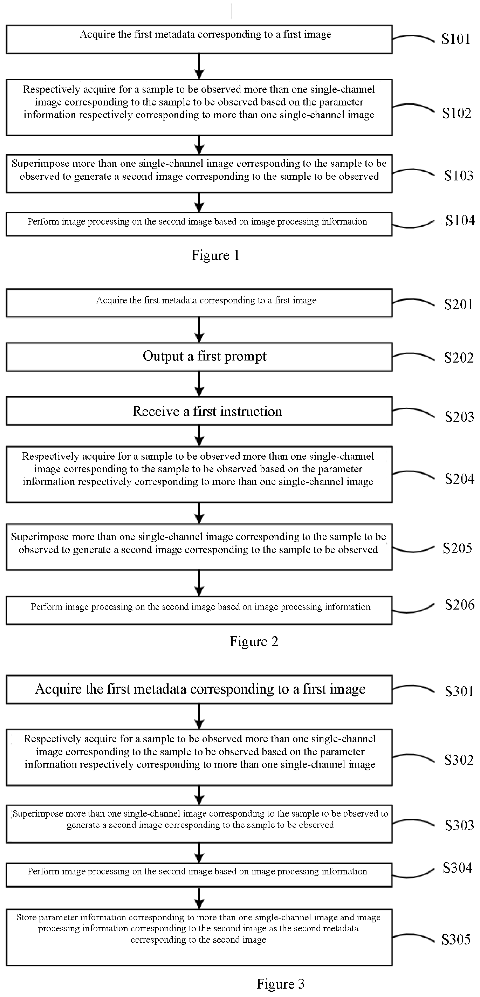

FIG. **1** shows a schematic flowchart of an image reproduction method according to an embodiment of the present disclosure. As shown in FIG. **1**, the method can be executed by an image reproduction apparatus. The method may comprise, but is not limited to, the following steps:
Step S101: Acquire the first metadata corresponding to a first image.

Wherein, in some embodiments, the first image is composed of more than one single-channel image, and the first metadata includes parameter information corresponding to more than one single-channel image and image processing information corresponding to the first image.

Wherein, the first image may be a superimposed image stored in a gallery of the image reproduction apparatus or a superimposed image received from another external device. Wherein, the image processing information is information related to image processing.

Wherein, a superimposed image refers to an image formed by superimposing a plurality of single-channel images, wherein a single-channel image may be an image of various styles. For example, it may be a color image captured by a conventional optical camera, or an infrared image captured by an infrared camera, or a fluorescent image generated by means of a fluorescence microscope.

The first metadata corresponding to the first image may be stored in association with the first image in the gallery, or may be stored in the first image. The first metadata includes parameter information corresponding to each of the plurality of single-channel images constituting the first image and image processing information corresponding to the first image.

Wherein, the parameter information corresponding to a single-channel image may include parameters for acquiring the single-channel image. For example, when the single-channel image is an image captured by a conventional optical camera, the parameter information corresponding to the single-channel image may include shooting parameters of the optical camera when capturing the single-channel image, wherein the shooting parameters may include exposure time, focus mode, etc. For another example, when the single-channel image is a fluorescent image generated by means of a fluorescence microscope, the parameter information corresponding to the single-channel image may include imaging mode of the fluorescence microscope and microscope parameters, wherein the microscope parameters may include objective lens magnification, working distance, etc.

Step S101, respectively acquire for a sample to be observed more than one single-channel image corresponding to the sample to be observed based on the parameter information respectively corresponding to more than one single-channel image.

After the first metadata is acquired, more than one single-channel image corresponding to the sample to be observed can be respectively acquired based on the parameter information included in the first metadata and corresponding to each single-channel image constituting the first image.

In other words, according to the number of single-channel images constituting the first image, the same number of single-channel images corresponding to the sample to be observed is acquired, and each single-channel image corresponding to the sample to be observed is respectively acquired in the same manner as that of each single-channel image of the first image.

For example, the first image is composed of three single-channel images, namely a first single-channel image Image1, a second single-channel image Image2, and a third single-channel image Image3; the acquired first metadata includes parameter information Parameter1 corresponding to the first single-channel image Image1, parameter information Parameter2 corresponding to the second single-channel image Image2, and parameter information Parameter3 corresponding to the third single-channel image Image3. Then, for the sample to be observed, a first single-channel image Image1' corresponding to the sample to be observed can be acquired based on the parameter information Parameter1, a second single-channel image Image2' corresponding to the sample to be observed can be acquired based on the parameter information Parameter2, and a third single-channel image Image3' corresponding to the sample to be observed can be acquired based on the parameter information Parameter3.

In some embodiments, the respective acquisition for a sample to be observed of more than one single-channel image corresponding to the sample to be observed based on the parameter information respectively corresponding to more than one single-channel image comprises: the adjustment of parameter settings of an image generation device for each single-channel image constituting the first image based on the parameter information corresponding to the single-channel images; and the use of the adjusted image generation device to acquire single-channel images corresponding to the sample to be observed.

Specifically, in order to acquire each single-channel image corresponding to the sample to be observed, it is necessary to respectively adjust the parameter settings of the image generation device based on the acquired parameter information corresponding to each single-channel image of the first image and respectively use the adjusted image generation device to acquire each single-channel image of the sample to be observed. Wherein, the image generation device may be a part of or connected to the image reproduction apparatus that performs the image reproduction method.

For example, the acquired parameter information is Parameter1, Parameter2, and Parameter3, respectively, wherein Parameter1 includes an exposure time and a focus mode of a camera, Parameter2 includes an exposure time and a focus mode of the camera, an imaging mode of a fluorescence microscope, and microscope parameters, and Parameter3 includes an exposure time and a focus mode of the camera, an imaging mode of the fluorescence microscope, and microscope parameters (the various parameters included in Parameter3 may be the same as or different from the various parameters included in Parameter2); then, the parameter settings of the image generation device (here, the camera) can be adjusted based on Parameter1, and the adjusted camera is used to acquire a first single-channel image corresponding to the sample to be observed; the parameter settings of the image generation device (here, the camera and the fluorescence microscope) are adjusted based on Parameter2, and the adjusted camera and fluorescence microscope are used to acquire a second single-channel image corresponding to the sample to be observed; and the parameter settings of the image generation device (here, the camera and the fluorescence microscope) are adjusted based on Parameter3, and the adjusted camera and fluorescence microscope are used to acquire a third single-channel image corresponding to the sample to be observed.

In some embodiments, before adjusting the parameter settings of the image generation device, said method further comprises: the determination of whether the parameter settings of said image generation device can be adjusted based on the parameter information corresponding to said single-channel images. the adjustment of the parameter settings of the image generation device based on said parameter information corresponding to said single-channel images, which comprises: the adjustment of the parameter settings of said image generation device based on the parameter information corresponding to said single-channel images when the parameter settings of said image generation device can be adjusted.

In some embodiments, said method further comprises: the output of a second prompt when the parameter settings of said image generation device cannot be adjusted, wherein the second prompt is used to indicate to a user the parameters of said image generation device that could not be automatically adjusted.

Some parameter settings of the image generation device may not be automatically adjusted in some cases and need to be manually adjusted by a user, for example, the objective lens magnification of a fluorescence microscope needs to be adjusted by the user manually rotating a knob. Therefore, in order to avoid problems caused by the inability to automatically adjust the parameter settings of the image generation device (such as being unable to acquire a single-channel image with the desired parameter settings), it is necessary to determine, before adjusting the parameter settings of the image generation device, whether the parameter settings of the image generation device can be adjusted based on the parameter information. If the parameter settings of the image generation device can be adjusted based on the parameter information, then the parameter settings of the image generation device are adjusted accordingly; if the parameter settings of the image generation device cannot be adjusted based on the parameter information, then a second prompt may be output to prompt the user that the parameter settings of the image generation device cannot be adjusted accordingly. Wherein, the second prompt may indicate to the user which parameters of the image generation device cannot be automatically adjusted. For example, when the output second prompt indicates the objective lens magnification, the user can learn from the prompt that the objective lens magnification needs to be manually adjusted.

In some embodiments, the second prompt further comprises guidance information for guiding the user to manually adjust said parameters that could not be automatically adjusted.

Since some parameter settings of the image generation device are usually relatively complex, the user may not know how to set the parameters for the image generation device. Therefore, in order to help the user appropriately adjust the parameter settings of the image generation device, the second prompt may also include guidance information, and the guidance information can guide the user to manually adjust parameters that could not be automatically adjusted.

For example, the second prompt indicates that the objective lens magnification cannot be automatically adjusted, and at the same time,the second prompt may also include guidance information, in which the guidance information is used to indicate to the user specific operating instructions for adjusting the objective lens magnification. This allows the user to be able to easily realize manual adjustment of the objective lens magnification according to the guidance information.

In some embodiments, the second prompt may be provided in the form of audio output, text output, or any other output.

In some embodiments, the image generation device comprises a microscope and a camera, and the parameter information comprises at least one of imaging mode, microscope parameters, and shooting parameters; the determination of whether the parameter settings of said image generation device can be adjusted comprises at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

In order to acquire a superimposed image corresponding to the sample to be observed, it is necessary to use an image generation device to acquire a plurality of single-channel images that constitute the superimposed image. Wherein, a single-channel image may be a color image, an infrared image, or a fluorescent image, etc. When the single-channel image is a color image or an infrared image, in order to be able to acquire the single-channel image, the image generation device includes a camera; when the single-channel image is a fluorescent image, in order to be able to acquire the single-channel image, the image generation device includes a microscope and a camera.

Correspondingly, the parameter information may comprise at least one of imaging mode of the microscope, microscope parameters, and shooting parameters of the camera.

When determining whether the parameter settings of the image generation device can be adjusted, a determination is made based on the parameter information whether the parameter settings of the microscope and/or camera of the image generation device can be adjusted. For example, if the parameter information includes shooting parameters of the camera, a determination is made whether the camera can be adjusted according to the shooting parameters. In another example, if the parameter information includes imaging mode of the microscope, microscope parameters, and shooting parameters of the camera, a determination is made whether the microscope can be adjusted according to the microscope parameters, a determination is made whether the imaging mode of the microscope can be adjusted according to the imaging mode included in the parameter information, and a determination is made whether the camera can be adjusted according to the shooting parameters.

In some embodiments, before the use of the adjusted image generation device to acquire single-channel images corresponding to said sample to be observed, said method further comprises: the reception of a second instruction, wherein said second instruction indicates that the parameter settings of said image generation device have been successfully adjusted.

When adjusting the parameter settings of the image generation device based on the parameter information, an unexpected situation may occur where the parameter settings of the image generation device are not successfully adjusted. If the image generation device is used to acquire a single-channel image when its parameter settings have not been successfully adjusted, the acquired single-channel image may be inconsistent with the desired single-channel image, i.e., it cannot meet user needs.

To avoid the above problems, the present application provides a user interaction function. Before using the adjusted image generation device to acquire a single-channel image corresponding to the sample to be observed, confirmation from the user is required. After receiving a confirmation instruction indicating that the parameter settings of the image generation device have been successfully adjusted, the adjusted image generation device is used to acquire a single-channel image corresponding to the sample to be observed.

In some embodiments, in order to prompt the user to confirm the adjustment of the parameter settings of the image generation device, said method further comprises: the output of a prompt used for instructing the user to confirm the adjustment of the parameter settings of the image generation device.

For example, after adjusting the parameter settings of the image generation device based on the parameter information,
a prompt "Please confirm whether the XX parameter of the image generation device has been successfully adjusted to XX" is output. After the user receives the prompt, they confirm whether the corresponding parameter of the image generation device has been successfully adjusted to the desired value. If the corresponding parameter of the image generation device has been successfully adjusted to the desired value, a confirmation instruction can be input; otherwise, the user needs to manually adjust the parameter that was not successfully adjusted and then input the confirmation instruction after all corresponding parameters of the image generation device have been adjusted to the desired values.

In some embodiments, before the use of the adjusted image generation device to acquire single-channel images corresponding to said sample to be observed, said method further comprises: Make a determination of whether the parameter settings of the image generation device have taken effect. the use of said adjusted image generation device to acquire the single-channel images corresponding to said sample to be observed, which comprises: the use of the adjusted image generation device to acquire the single-channel images corresponding to said sample to be observed after the parameter settings of said image generation device have taken effect.

Certain parameter settings of the image generation device require some time to take effect after being adjusted. In particular, in order to acquire a superimposed image corresponding to the sample to be observed, it is necessary to use an image generation device to acquire a plurality of single-channel images that constitute the superimposed image, and the parameter information corresponding to each single-channel image may have a large gap, which means that a large adjustment needs to be made to the parameter settings of the image generation device, and thus the adjusted parameter settings will require some time to take effect.

For example, the exposure time of the shooting parameter of the camera corresponding to the first single-channel image is 10s, while the exposure time of the shooting parameter of the camera corresponding to the second single-channel image is 100s. After using the camera to acquire the first single-channel image, it is necessary to reset the exposure time of the camera, and wait for a period of time for the adjusted exposure time to take effect before the camera is used again to acquire the second single-channel image. If the second single-channel image is acquired immediately after adjusting the exposure time (i.e., when the adjusted exposure time has not yet taken effect), the exposure time used at this time is still the original exposure time (10s) instead of the adjusted exposure time (100s). In this case, the acquired second single-channel image may be inconsistent with the desired single-channel image, i.e., it cannot meet user needs.

To avoid the above problems, a further determination is made to see whether the parameter settings of the image generation device have taken effect before using the adjusted image generation device to acquire a single-channel image corresponding to the sample to be observed. After determining that the parameter settings of the image generation device have taken effect, the adjusted image generation device is used to acquire a single-channel image corresponding to the sample to be observed.

Step S103: Superimpose more than one single-channel image corresponding to the sample to be observed to generate a second image corresponding to the sample to be observed.

After acquiring each single-channel image corresponding to the sample to be observed, the acquired a plurality of single-channel images are superimposed to acquire a superimposed image corresponding to the sample to be observed.

For example, after acquiring the first single-channel image Image1', the second single-channel image Image2', and the third single-channel image Image3' corresponding to the sample to be observed, the first single-channel image Image1', the second single-channel image Image2', and the third single-channel image Image3' are superimposed to generate a superimposed image corresponding to the sample to be observed.

After the second image is generated, the image generation and reproduction apparatus may present the generated second image to the user.

Step S104: Perform image processing on the second image based on image processing information.

The first metadata also comprises image processing information corresponding to the first image, so after the second image is generated, image processing can be performed on the second image according to the image processing information.

In some embodiments, image processing may comprise artificial intelligence (AI) analysis, and the image processing information may include an AI analysis goal and information about an AI analysis tool. The performance of image processing based on the image processing information comprises: the acquisition of an AI analysis tool according to the information about the AI analysis tool; and the use of the AI analysis tool to perform image processing to realize the AI analysis goal.

In some embodiments, the AI analysis tool includes one or more AI analysis models, and the information about the AI analysis tool includes at least one of the following: relevant information for acquiring an AI analysis model; or an AI analysis model.

When performing AI analysis on an image, an AI analysis model is usually used to realize the AI analysis goal. In order to be able to acquire the AI analysis model used for AI analysis, relevant information for acquiring the AI analysis model may be included in the image processing information, and the corresponding AI analysis model can be acquired based on the relevant information.

Wherein, the relevant information for acquiring the AI analysis model may be, for example, a storage address of the AI analysis model, a name of the AI analysis model, a name of a cell to which the AI analysis model is applied, an index of the AI analysis model, etc.

However, an AI analysis model is usually generated through training. For example, an initial AI analysis model can usually be continuously trained to acquire an updated AI analysis model. That is, the AI analysis model is not always unchanged. After an initial AI analysis model is used to process a first image, the storage address of the initial AI analysis model can be used as relevant information for acquiring the AI analysis model. However, if the AI analysis model is subsequently updated, the updated AI analysis model may be stored at the corresponding storage address instead of the initial AI analysis model. In this case, if an AI analysis model is still acquired based on the storage address of the AI analysis model, the acquired AI analysis model is the updated AI analysis model rather than the initial AI analysis model used to perform AI analysis on the first image.

In order to ensure that the AI analysis model acquired according to the image processing information corresponding to the first image is the AI analysis model used to perform AI analysis on the first image, the AI analysis model itself may be directly included in the image processing information corresponding to the first image. Wherein, the AI analysis model may be stored in the form of a file.

In some embodiments, the information about the AI analysis tool further comprises feature information of each AI analysis model.

As described above, an initial AI analysis model can be continuously trained to acquire an updated AI analysis model, so in addition to the initial AI analysis model, a plurality of updated AI analysis models can also be acquired through different training processes. Updated AI analysis models acquired through different training processes are different.

For example, after a user uses an initial AI analysis model to analyze an image, it is found that the initial AI analysis model fails to successfully identify some separate cells in the image (for example, identifying a plurality of separate cells as a single cell) or fails to identify some cells in the image (for example, misidentification or omission occurs). Thus, the initial AI analysis model cannot meet the user's needs. In this case, the user usually makes annotations on the image (for example, annotating the separate cells, annotating the misidentified or omitted cells) and uses the annotated image to update the initial AI analysis model through training to acquire an updated AI analysis model.

For another example, after a user uses an initial AI analysis model to analyze an image, it is found that the initial AI analysis model fails to successfully distinguish between the image background and the cells in the image, thus the initial AI analysis model cannot meet the user's needs. In this case, the user usually annotates the image (for example, annotating the background and cells with different markers) and uses the annotated image to update the initial AI analysis model through training to acquire an updated AI analysis model.

In order to indicate the differences between different AI analysis models, the information about the AI analysis tool also includes feature information for each AI analysis model. For example, the feature information can indicate the problems that the AI analysis model is good at handling and the training objectives when training the AI analysis model. For example, some AI analysis models may be better at distinguishing between background and cells, while some AI analysis models may be better at identifying separate cells.

In some embodiments, when the AI analysis tool includes a plurality of AI analysis models, after acquiring the AI analysis tool based on the information about the AI analysis tool, said method further comprises: the determination of a target AI analysis model from a plurality of AI analysis models. Said use of the AI analysis tool to perform image processing to realize the AI analysis goal comprises: the use of the target AI analysis model to perform image processing to realize the AI analysis goal.

When a plurality of AI analysis models are acquired based on the information about the AI analysis tool, a target AI analysis model can be determined from the plurality of AI analysis models, with the target AI analysis model being used to perform image processing to realize the AI analysis goal.

In some embodiments, the determination of a target AI analysis model from said plurality of AI analysis models comprises: the reception of an AI analysis demand that is input by a user; and the determination of said target AI analysis model according to said AI analysis demand and the feature information of each AI analysis model.

According to embodiments of the present disclosure, a target AI analysis model can be recommended to the user. Specifically, an AI analysis demand can be received from the user, for example, the AI analysis goal the user expects to realize or the problem to be solved. The image reproduction apparatus, based on the AI analysis demand and the feature information of each AI analysis model, determines the AI analysis model with feature information that matches the AI analysis demand as the target AI analysis model.

Wherein, the user can determine the AI analysis demand based on the second image. For example, the user can observe the second image based on experience, thereby determining the AI analysis demand for performing AI analysis on the second image.

In some embodiments, the determination of a target AI analysis model from said plurality of AI analysis models comprises: the display of information about said plurality of AI analysis models; and the determination of the target AI analysis model from said plurality of AI analysis models based on a selection input from a user.

According to embodiments of the present disclosure, the target AI analysis model can be selected by the user from a plurality of AI analysis models. Specifically, information about the plurality of AI analysis models (such as the name and storage address of each AI analysis model) can be displayed on a display interface, for example, in the form of a list, and the AI analysis model selected by the user is determined as the target AI analysis model based on the user's selection input.

In some embodiments, the AI analysis goal comprises at least one of the following: determination of cell confluence; determination of cell count; or determination of cell transfection rate.

For example, if the image processing information indicates a first AI analysis model was used to determine the cell transfection rate in the first image, then the first analysis model can also be used to determine the cell transfection rate in the second image.

In some embodiments, the image generation and reproduction apparatus itself may not have an image processing function. In this case, the image generation and reproduction apparatus can send the image processing information and the second image to an external image processing device. After the external image processing device performs image processing on the second image based on the image processing information, it returns the processed second image to the image generation and reproduction apparatus, and the image generation and reproduction apparatus can present the processed second image to the user.

According to the image reproduction method provided by the embodiments of the present disclosure, a corresponding superimposed image (i.e., the second image) for the sample to be observed can be automatically acquired based on the current superimposed image (i.e., the first image) through the acquisition of the first metadata corresponding to a first image, the respective acquisition for a sample to be observed of more than one single-channel image corresponding to the sample to be observed based on parameter information respectively corresponding to a plurality of single-channel images constituting the first image included in the first metadata, the superposition of more than one single-channel image corresponding to the sample to be observed to generate a second image corresponding to the sample to be observed, and the performance of image processing on said second image based on image processing information included in the first metadata. Since the plurality of single-channel images constituting the newly generated superimposed image are acquired in the same manner as the plurality of single-channel images constituting the current superimposed image and are processed in the same image processing manner as that of the current superimposed image, the newly generated superimposed image has the same image quality as the current superimposed image and is expected to have a similar image processing effect. Thus, a user can, based on an existing superimposed image, reproduce a superimposed image with the same image quality for a sample to be observed and expect a similar image processing effect.

The information processing method involved in the embodiments of the present disclosure may comprise at least one of steps S101 to S104. For example, steps S101 to S103 can be implemented as an independent embodiment, but it is not limited thereto.

In the embodiments of the present disclosure, some or all of the steps and their optional realization methods can be arbitrarily combined with some or all of the steps in other embodiments and can also be arbitrarily combined with the optional implementation methods of other embodiments.

FIG. 2 shows a schematic flowchart of another image reproduction method according to an embodiment of the present disclosure. As shown in FIG. 2, the method can be executed by an image reproduction apparatus. The method may comprise, but is not limited to, the following steps:
Step S201: Acquire the first metadata corresponding to a first image.

Wherein, in some embodiments, the first image is composed of more than one single-channel image, and the first metadata includes parameter information corresponding to more than one single-channel image and image processing information corresponding to the first image.

For a detailed introduction of step S201, reference can be made to the description of step S101 in the above embodiment, which will not be repeated here.

Step S202: Output a first prompt. Wherein, the first prompt is used to prompt a user to confirm whether to generate a second image for a sample to be observed.

In some cases, in order to acquire a superimposed image corresponding to a sample to be observed, it is necessary to perform the required preprocessing on the sample to be observed. For example, in order to acquire a fluorescence image of a sample to be observed, it is necessary to stain the sample to be observed in advance. In another example, in order to acquire an image of a specific part of a sample to be observed, it is necessary to adjust the sample to be observed to a suitable position.

Thus, in order to acquire a superimposed image corresponding to a sample to be observed, according to this embodiment, after acquiring the first metadata corresponding to the first image, a first prompt can be output to prompt the user to confirm whether to generate a superimposed image for the sample to be observed. After the user receives the first prompt, if it is confirmed that a superimposed image for the sample to be observed can be generated, it is necessary to complete the preprocessing of the sample to be observed to ensure that the superimposed image corresponding to the sample to be observed can be acquired.

In some embodiments, the first prompt may include parameter information respectively corresponding to each single-channel image of the first image so that the user can, based on the parameter information respectively corresponding to each single-channel image of the first image, judge whether to acquire each single-channel image of the sample to be observed based on the corresponding parameter information.

Step S203: Receive a first instruction. Wherein, the first instruction instructs the user to confirm that a second image for the sample to be observed can be generated.

If the user confirms that a superimposed image for the sample to be observed can be generated, a first instruction can be provided.

After receiving the first instruction, the image reproduction apparatus confirms that a superimposed image for the sample to be observed can be generated based on the first instruction.

Step S204: Respectively acquire for a sample to be observed more than one single-channel image corresponding to the sample to be observed based on the parameter information respectively corresponding to more than one single-channel image.

Step S205: Superimpose more than one single-channel image corresponding to the sample to be observed to generate a second image corresponding to the sample to be observed.

Step S206: Perform image processing on the second image based on image processing information.

For a detailed introduction of steps S204 to S206, reference can be made to the description of steps S102 to S104 in the above embodiment, which will not be repeated here.

According to the image reproduction method provided by the embodiments of the present disclosure, a corresponding superimposed image (i.e., the second image) for the sample to be observed can be automatically acquired based on the current superimposed image (i.e., the first image) through the acquisition of the first metadata corresponding to a first image, the output of a prompt for prompting a user to confirm whether to generate a superimposed image for a sample to be observed, the reception of a second instruction instructing the user to confirm a superimposed image for the sample to be observed can be generated, the respective acquisition for a sample to be observed of more than one single-channel image corresponding to the sample to be observed based on parameter information respectively corresponding to more than one single-channel image constituting the first image included in the first metadata, the superposition of more than one single-channel image corresponding to the sample to be observed to generate a second image corresponding to the sample to be observed, and the performance of image processing on said second image based on image processing information included in the first metadata. Since the plurality of single-channel images constituting the newly generated superimposed image are acquired in the same manner as the plurality of single-channel images constituting the current superimposed image and are processed in the same image processing manner as that of the current superimposed image, the newly generated superimposed image has the same image quality as the current superimposed image and is expected to have a similar image processing effect.

Thus, a user can, based on an existing superimposed image, reproduce a superimposed image with the same image quality for a sample to be observed and acquire a desired image processing result.

The information processing method involved in the embodiments of the present disclosure may comprise at least one of steps S201 to S206. For example, steps S201 to S205 can be implemented as an independent embodiment, or steps S201 and S203 to S205 can be implemented as an independent embodiment, but it is not limited thereto.

In the embodiments of the present disclosure, some or all of the steps and their optional realization methods can be arbitrarily combined with some or all of the steps in other embodiments and can also be arbitrarily combined with the optional implementation methods of other embodiments.

FIG. 3 shows a schematic flowchart of another image reproduction method according to an embodiment of the present disclosure. As shown in FIG. 3, the method can be executed by an image reproduction apparatus. The method may comprise, but is not limited to, the following steps:
Step S301: Acquire the first metadata corresponding to a first image.

Wherein, in some embodiments, the first image is composed of more than one single-channel image, and the first metadata includes parameter information corresponding to more than one single-channel image and image processing information corresponding to the first image.

For a detailed introduction of step S301, reference can be made to the description of step S101 in the above embodiment, which will not be repeated here.

Step S302: Respectively acquire for a sample to be observed more than one single-channel image corresponding to the sample to be observed based on the parameter information respectively corresponding to more than one single-channel image.

Step S303: Superimpose more than one single-channel image corresponding to the sample to be observed to generate a second image corresponding to the sample to be observed.

Step S304: Perform image processing on the second image based on image processing information.

For a detailed introduction of steps S302 to S304, reference can be made to the description of steps S102 to S104 in the above embodiment, which will not be repeated here.

Step S305: Store parameter information corresponding to more than one single-channel image and image processing information corresponding to the second image as the second metadata corresponding to the second image.

After the second image is generated, the parameter information corresponding to each single-channel image constituting the second image and the image processing information corresponding to the second image are stored as the second metadata corresponding to the second image so that subsequently the parameter information corresponding to each single-channel image and the image processing information corresponding to the second image can be acquired based on the second image, thereby realizing image reproduction based on the second image.

According to the image reproduction method provided by the embodiments of the present disclosure, a corresponding superimposed image (i.e., the second image) for the sample to be observed can be automatically acquired based on the current superimposed image (i.e., the first image) through the acquisition of the first metadata corresponding to a first image, the respective acquisition for a sample to be observed of more than one single-channel image corresponding to the sample to be observed based on parameter information respectively corresponding to a plurality of single-channel images constituting the first image included in the first metadata, the superposition of more than one single-channel image corresponding to the sample to be observed to generate a second image corresponding to the sample to be observed, and the performance of image processing on said second image based on image processing information included in the first metadata. Since the plurality of single-channel images constituting the newly generated superimposed image are acquired in the same manner as the plurality of single-channel images constituting the current superimposed image and are processed in the same image processing manner as that of the current superimposed image, the newly generated superimposed image has the same image quality as the current superimposed image and is expected to have a similar image processing effect.According to the image reproduction method provided by the embodiments of the present disclosure, a corresponding superimposed image (i.e., the second image) for the sample to be observed can be automatically acquired based on the current superimposed image (i.e., the first image) through the acquisition of the first metadata corresponding to a first image, the respective acquisition for a sample to be observed of more than one single-channel image corresponding to the sample to be observed based on parameter information respectively corresponding to more than one single-channel image constituting the first image included in the first metadata, the superposition of more than one single-channel image corresponding to the sample to be observed to generate a second image corresponding to the sample to be observed, the performance of image processing on said second image based on image processing information included in the first metadata, and the storage of parameter information respectively corresponding to more than one single-channel image and image processing information corresponding to the second image as the second metadata corresponding to said second image. In addition, it is also possible to acquire from the corresponding second metadata of the second image the parameter information corresponding to each single-channel image and the image processing information corresponding to the second image. Since the plurality of single-channel images constituting the newly generated superimposed image are acquired in the same manner as the plurality of single-channel images constituting the current superimposed image and since the newly generated superimposed image is processed in the same image processing manner as the current superimposed image, the newly generated superimposed image has the same image quality as the current superimposed image and is expected to have a similar image processing effect. Thus, a user can, based on an existing superimposed image, reproduce a superimposed image with the same image quality for a sample to be observed and acquire a desired image processing result. In addition, since the corresponding second metadata of the second image stores the parameter information corresponding to each single-channel image and the image processing information corresponding to the second image, a user can subsequently realize image reproduction based on the second image.

The information processing method involved in the embodiments of the present disclosure may comprise at least one of steps S301 to S305. For example, steps
S301 to S303 can be implemented as an independent embodiment, or steps S301 to S304 can be implemented as an independent embodiment, but it is not limited thereto.

In the embodiments of the present disclosure, some or all of the steps and their optional realization methods can be arbitrarily combined with some or all of the steps in other embodiments and can also be arbitrarily combined with the optional implementation methods of other embodiments. For example, the above steps S301 to S305 can be combined with steps S202 to S203, but it is not limited thereto.

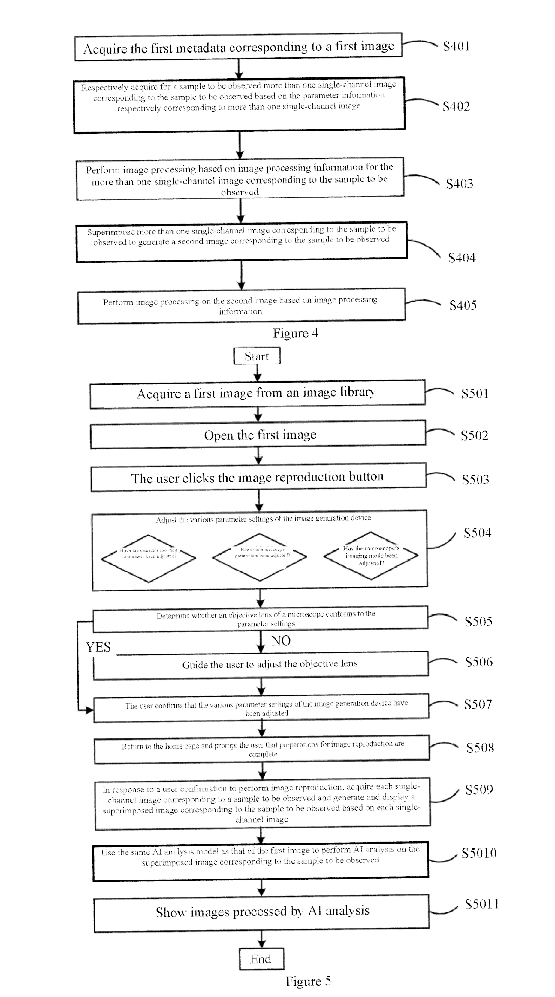

FIG. 4 shows a schematic flowchart of another image reproduction method according to an embodiment of the present disclosure. As shown in FIG. 4, the method can be executed by an image reproduction apparatus. The method may comprise, but is not limited to, the following steps:
Step S401: Acquire the first metadata corresponding to a first image.

Wherein, in some embodiments, the first image is composed of more than one single-channel image, and the first metadata includes parameter information corresponding to more than one single-channel image and image processing information corresponding to the first image.

For a detailed introduction of step S401, reference can be made to the description of step S101 in the above embodiment, which will not be repeated here.

In addition, in some embodiments, the first metadata further comprises image processing information respectively corresponding to one or more single-channel images constituting the first image.

According to embodiments of the present disclosure, since the first image is a superimposed image composed of a plurality of single-channel images, in addition to the first image being able to undergo image processing, the single-channel images constituting the first image can also undergo image processing. Thus, the first metadata may also include image processing information respectively corresponding to one or more single-channel images. Wherein, each single-channel image constituting the first image may undergo image processing or some of the single-channel images constituting the first image may undergo image processing.

In some embodiments, the first image may not have undergone image processing, while only one or more single-channel images constituting the first image have undergone image processing, in which case, the first metadata does not include image processing information corresponding to the first image but does include image processing information corresponding to one or more single-channel images.

Step S402: Respectively acquire for a sample to be observed more than one single-channel image corresponding to the sample to be observed based on the parameter information respectively corresponding to more than one single-channel image.

For a detailed introduction of step S402, reference can be made to the description of step S102 in the above embodiment, which will not be repeated here.

Step S403: Perform image processing based on image processing information for the more than one single-channel image corresponding to the sample to be observed; or send the second image and the image processing information to an external image processing device and receive the image-processed second image from the external image processing device.

When the first metadata further includes image processing information corresponding to one or more single-channel images, after acquiring one or more single-channel images of the second image, it is possible to respectively perform image processing on the one or more single-channel images of the second image based on the image processing information.

Wherein, for the specific process of performing image processing on each single-channel image according to the image processing information, reference can be made to the process of performing image processing on the second image according to the image processing information, taking for example the description of step S104, which will not be repeated here.

For example, if the image processing information corresponding to a first single-channel image of the first image indicates using a first AI analysis model to determine a cell transfection rate in the first single-channel image, then the first analysis model can also be used to determine the cell transfection rate of a first single-channel image of the second image (where the first single-channel image of the second image is a single-channel image acquired using the parameter information corresponding to the first single-channel image of the first image). If the image processing information corresponding to a second single-channel image of the first image indicates performing a cropping process on the second single-channel image, then a cropping process can also be performed on a second single-channel image of the second image (where the second single-channel image of the second image is a single-channel image acquired using the parameter information corresponding to the second single-channel image of the first image).

In some embodiments, the image generation and reproduction apparatus itself may not have an image processing function, in which case, the image generation and reproduction apparatus can send the image processing information and the second image to an external image processing device. After the external image processing device performs image processing on each single-channel image of the second image based on the image processing information, it returns the image-processed second image to the image generation and reproduction apparatus, and the image generation and reproduction apparatus can present the image-processed second image to a user.

In some embodiments, the parameter information corresponding to more than one single-channel image constituting the second image, the image processing information corresponding to the second image, and the image processing information corresponding to one or more single-channel images constituting the second image are stored as the second metadata corresponding to the second image.

Step S404: Superimpose more than one single-channel image corresponding to the sample to be observed to generate a second image corresponding to the sample to be observed.

Wherein, one or more of more than one single-channel image corresponding to the sample to be observed have already undergone image processing, and the one or more image-processed single-channel images can be superimposed with other unprocessed single-channel images to acquire the second image, or all of more than one unprocessed single-channel image can be superimposed to acquire the second image, depending on specific needs.

Step S405: Perform image processing on the second image based on image processing information.

For a detailed introduction of steps S404 to S405, reference can be made to the description of steps S103 to S104 in the above embodiment, which will not be repeated here.

According to the image reproduction method provided by the embodiments of the present disclosure, a corresponding superimposed image (i.e., the second image) for the sample to be observed can be automatically acquired based on the current superimposed image (i.e., the first image) through the acquisition of the first metadata corresponding to a first image, the respective acquisition for a sample to be observed of more than one single-channel image corresponding to the sample to be observed based on parameter information respectively corresponding to more than one single-channel image constituting the first image included in the first metadata, the superposition of more than one single-channel image corresponding to the sample to be observed to generate a second image corresponding to the sample to be observed, and the performance of image processing on the second image and/or each of its single-channel images based on image processing information included in the first metadata. In addition, it is also possible to automatically perform image processing on the superimposed image corresponding to the sample to be observed based on the current superimposed image.

The information processing method involved in the embodiments of the present disclosure may comprise at least one of steps S401 to S405. For example, steps S401 to S404 can be implemented as an independent embodiment, and steps S401 to S403 can be implemented as an independent embodiment, but it is not limited thereto.

In the embodiments of the present disclosure, some or all of the steps and their optional realization methods can be arbitrarily combined with some or all of the steps in other embodiments and can also be arbitrarily combined with the optional implementation methods of other embodiments. For example, the above steps S401 to S404 can be combined with steps S202 to S203, and steps S401 to S404 can be combined with step S305, but it is not limited thereto.

FIG. 5 shows a schematic flowchart of another image reproduction method according to an embodiment of the present disclosure. As shown in FIG. 5, the method may comprise, but is not limited to, the following steps:
Step S501: Acquire a first image from an image library.
Step S502: Open the first image.
Step S503: The user clicks the image reproduction button.
Step S504: Adjust the various parameter settings of the image generation device.
Step S505: Determine whether an objective lens of a microscope conforms to the parameter settings. If not in conformance, go to step S506, otherwise go to step S507.
Step S506: Guide the user to adjust the objective lens.
Step S507: The user confirms that the various parameter settings of the image generation device have been adjusted.
Step S508: Return to the home page and prompt the user that preparations for image reproduction are complete.
Step S509: In response to a user confirmation to perform image reproduction, acquire each single-channel image corresponding to a sample to be observed and generate and display a superimposed image corresponding to the sample to be observed based on each single-channel image.
Step S510: Use the same AI analysis model as that of the first image to perform AI analysis on the superimposed image corresponding to the sample to be observed.
Step S511: Display the image processed by AI analysis.

The embodiments of the present disclosure also propose an apparatus for realizing any of the above methods. For example, an apparatus is proposed, and this apparatus includes units or modules for implementing each step in any of the above methods.

It should be understood that the division of each unit or module in the apparatus is only a division of logical functions, and in actual realization, they can be fully or partially integrated into one physical entity, or they can be physically separate. In addition, the units or modules in the apparatus can be realized in the form of a processor calling software: For example, the apparatus includes a processor, and the processor is connected to a memory. Instructions are stored in the memory, and the processor calls the instructions stored in the memory to realize any of the above methods or to implement the functions of each unit or module of the apparatus, wherein, the processor is, for example, a general-purpose processor such as a central processing unit (CPU) or a microprocessor, and the memory is a memory within the apparatus or a memory external to the apparatus. Alternatively, the units or modules in the apparatus can be realized in the form of a hardware circuit, and the functions of some or all of the units or modules can be realized through the design of the hardware circuit. The above-mentioned hardware circuit can be understood as one or more processors, for example, in one realization, the above-mentioned hardware circuit is an application-specific integrated circuit (ASIC), and through the design of the logical relationships of components within the circuit, the functions of some or all of the above units or modules are implemented. For another example, in another realization, the above-mentioned hardware circuit can be realized by a programmable logic device (PLD), and taking a field programmable gate array (FPGA) as an example, it can include a large number of logic gate circuits, and the connection relationships between the logic gate circuits are configured through a configuration file, thereby realizing the functions of some or all of the above units or modules. All units or modules of the above apparatus can be fully realized in the form of a processor calling software, or fully realized in the form of a hardware circuit, or partially implemented in the form of a processor calling software, with the remaining part being realized in the form of a hardware circuit.

In the embodiments of the present disclosure, a processor is a circuit with signal processing capabilities, and in one realization, the processor can be a circuit with instruction reading and execution capabilities, such as a central processing unit (CPU), a microprocessor, a graphics processing unit (GPU) (which can be understood as a microprocessor), or a digital signal processor (DSP). In another realization, the processor can realize certain functions through the logical relationships of a hardware circuit, and the logical relationships of the above-mentioned hardware circuit are fixed or reconfigurable. For example, the processor is a hardware circuit realized by an application-specific integrated circuit (ASIC) or a programmable logic device (PLD) such as an FPGA.

In a reconfigurable hardware circuit, the process of the processor loading a configuration document to realize the hardware circuit configuration can be understood as the process of the processor loading instructions to realize the functions of some or all of the above units or modules. In addition, it can also be a hardware circuit designed for artificial intelligence, which can be understood as an ASIC, for example, a neural network processing unit (NPU), a tensor processing unit (TPU), or a deep learning processing unit (DPU).

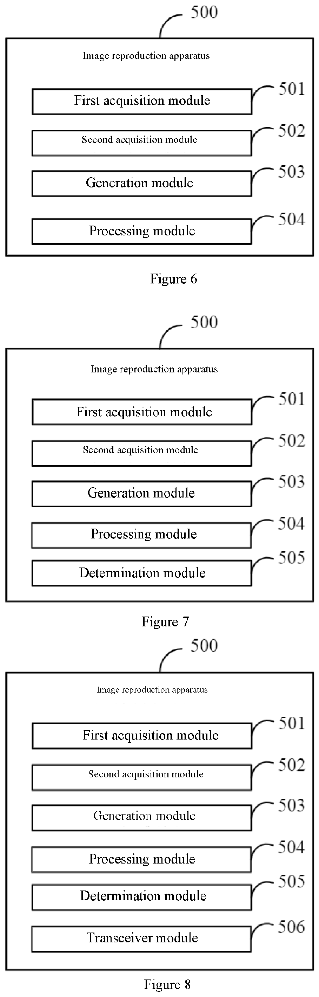

FIG. 6 is a schematic structural diagram of an image reproduction apparatus provided by embodiments of the present disclosure. As shown in FIG. 6, the image reproduction apparatus (500) may comprise a first acquisition module (501), a second acquisition module (502), a generation module (503), and a processing module (504).

The first acquisition module (501) is used for the acquisition of the first metadata corresponding to a first image, wherein said first image is composed of more than one single-channel image, while said first metadata comprises parameter information respectively corresponding to said more than one single-channel image and image processing information corresponding to said first image.

The second acquisition module (502) is used for the respective acquisition for a sample to be observed of more than one single-channel image corresponding to said sample to be observed based on the parameter information respectively corresponding to said more than one single-channel image.

The generation module (503) is used for the superposition of more than one single-channel image corresponding to said sample to be observed to generate a second image corresponding to said sample to be observed.

The processing module (504) is used for the performance of image processing on said second image based on said image processing information.

Optionally, said first metadata further comprises image processing information respectively corresponding to said more than one single-channel image. Said processing module (504) is further used for: respectively performing image processing based on said image processing information for the more than one single-channel image corresponding to said sample to be observed.

Optionally, said image processing comprises artificial intelligence (AI) analysis, and said image processing information comprises an AI analysis goal and information about an AI analysis tool, while said processing module (504) is used for: the acquisition of said AI analysis tool according to said information about the AI analysis tool; and the use of said AI analysis tool to perform image processing to realize said AI analysis goal.

Optionally, said AI analysis tool comprises one or more AI analysis models; and said information about the AI analysis tool comprises at least one of the following: information for acquiring each AI analysis model; each AI analysis model.

Optionally, said information about the AI analysis tool further comprises feature information of each AI analysis model.

Optionally, the AI analysis tool comprises a plurality of AI analysis models. Referring to FIG. 7, optionally, the apparatus further comprises: A determination module (505), used for the determination of the target AI analysis model from said plurality of AI analysis models; while said processing module (504) is used for: the use of said target AI analysis model to perform image processing to realize said AI analysis goal.

Optionally, said determination module (505) is used for: the reception of an AI analysis demand that is input by a user; and the determination of said target AI analysis model according to said AI analysis demand and the feature information of each AI analysis model.

Optionally, said determination module (505) is used for: the display of information about said plurality of AI analysis models; and the determination of the target AI analysis model from said plurality of AI analysis models based on a selection input from a user.

Optionally, said AI analysis goal comprises at least one of the following: determination of cell confluence; determination of cell count; or determination of cell transfection rate.

Referring to FIG. 8, optionally, said apparatus further comprises: a transceiver module (506): used for the output of a first prompt, wherein said first prompt is used to prompt a user to confirm whether to generate said second image for said sample to be observed; and used for the reception of a first instruction, wherein said first instruction instructs the user to confirm the generation of said second image for said sample to be observed.

Optionally, the second acquisition module (502) comprises: an adjustment unit, used for the adjustment of parameter settings of an image generation device for each single-channel image constituting said first image based on the parameter information corresponding to said single-channel images; and an acquisition unit, used for the use of the adjusted image generation device to acquire single-channel images corresponding to said sample to be observed.

Optionally, the second acquisition module (502) further comprises: a first determination unit, used for the determination of whether the parameter settings of said image generation device can be adjusted based on the parameter information corresponding to said single-channel images; and said adjustment unit, used for the adjustment of the parameter settings of said image generation device based on the parameter information corresponding to said single-channel images when the parameter settings of said image generation device can be adjusted.

Optionally, the second acquisition module (502) further comprises: an output unit, for the output of a second prompt when the parameter settings of said image generation device cannot be adjusted, wherein said second prompt is used to indicate to a user the parameters of said image generation device that could not be automatically adjusted.

Optionally, the second prompt further comprises guidance information for guiding a user to manually adjust the parameters that could not be automatically adjusted.

Optionally, the image generation device comprises a microscope and a camera, and the parameter information comprises at least one of imaging mode, microscope parameters, and shooting parameters; and said first determination unit is used for the execution of at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

Optionally, the second acquisition module (502) further comprises: a receiving unit for the reception of a second instruction, wherein said second instruction indicates that the parameter settings of said image generation device have been successfully adjusted.

Acquisition module (502) further comprises: determination unit, used for the determination of whether the parameter settings of said image generation device have taken effect; the second acquisition module (502) is used for the use of the adjusted image generation device to acquire the single-channel images corresponding to said sample to be observed after the parameter settings of said image generation device have taken effect.

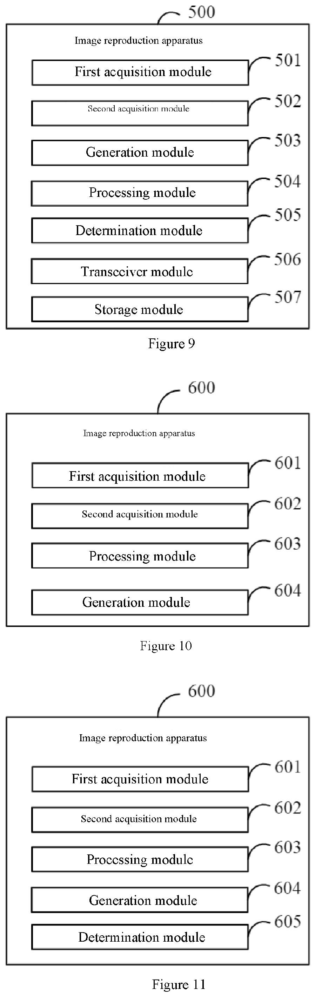

Referring to FIG. 9, optionally, the image reproduction apparatus (500) further comprises: a storage module (507), used for the storage of parameter information respectively corresponding to said more than one single-channel image and image processing information corresponding to said second image as the second metadata corresponding to said second image.

Optionally, the image reproduction apparatus (500) further comprises: a storage module (507), used for the storage of parameter information respectively corresponding to said more than one single-channel image, image processing information corresponding to said second image, and image processing information respectively corresponding to more than one single-channel image as the second metadata corresponding to said second image.

FIG. 10 is a schematic structural diagram of an image reproduction apparatus provided by the embodiments of the present disclosure. As shown in FIG. 10, the image reproduction apparatus (600) may comprise a first acquisition module (601), a second acquisition module (602), a processing module (603), and a generation module (604).

A first acquisition module (601), used for the acquisition of the first metadata corresponding to a first image, wherein said first image is composed of more than one single-channel image, while said first metadata comprises parameter information respectively corresponding to said more than one single-channel image and image processing information respectively corresponding to one or more single-channel images constituting said first image.

A second acquisition module (602), used for the respective acquisition for a sample to be observed of more than one single-channel image corresponding to said sample to be observed based on the parameter information respectively corresponding to said more than one single-channel image.

A processing module (603), used for the performance of image processing on one or more single-channel images respectively corresponding to said sample to be observed based on image processing information respectively corresponding to the one or more single-channel images constituting said first image.

A generation module (604), used for the superposition of more than one single-channel image corresponding to said sample to be observed to generate a second image corresponding to said sample to be observed.

Optionally, said image processing comprises artificial intelligence (AI) analysis, and said image processing information comprises an AI analysis goal and information about an AI analysis tool, while said processing module (603) is used for: the acquisition of said AI analysis tool according to said information about the AI analysis tool; and the use of said AI analysis tool to perform image processing to realize said AI analysis goal.

Optionally, said AI analysis tool comprises one or more AI analysis models; and said information about the AI analysis tool comprises at least one of the following: information for acquiring each AI analysis model; each AI analysis model.

Optionally, said information about the AI analysis tool further comprises feature information of each AI analysis model.

Optionally, the AI analysis tool comprises a plurality of AI analysis models. Referring to FIG. 11, optionally, the apparatus further comprises: A determination module (605), used for the determination of the target AI analysis model from said plurality of AI analysis models; while said processing module (603) is used for: the use of said target AI analysis model to perform image processing to realize said AI analysis goal.

Optionally, said determination module (605) is used for: the reception of an AI analysis demand that is input by a user; and the determination of said target AI analysis model according to said AI analysis demand and the feature information of each AI analysis model.

Optionally, said determination module (605) is used for: the display of information about said plurality of AI analysis models; and the determination of the target AI analysis model from said plurality of AI analysis models based on a selection input from a user.

Optionally, said AI analysis goal comprises at least one of the following: determination of cell confluence; determination of cell count; or determination of cell transfection rate.

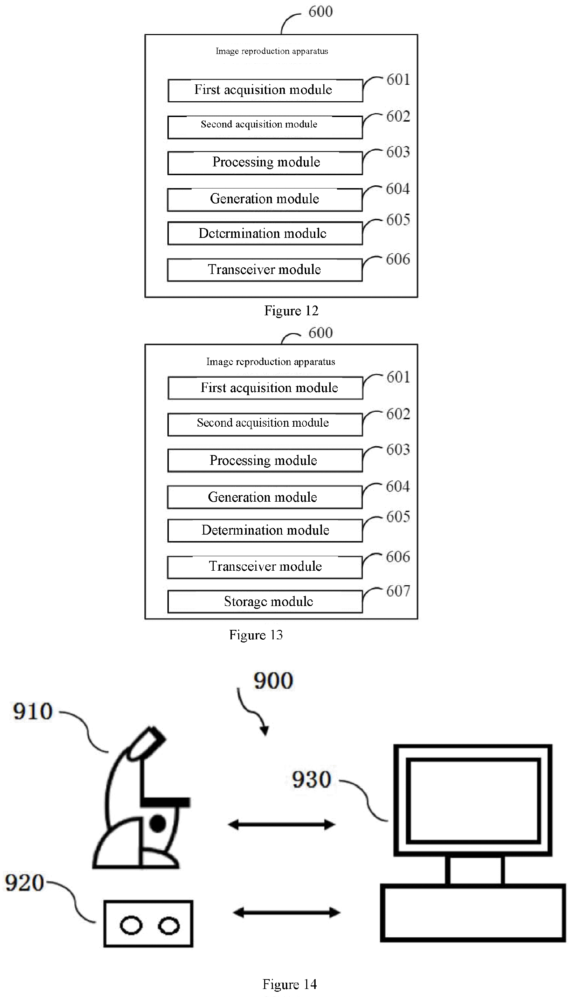

Referring to FIG. 12, optionally, the apparatus further comprises: a transceiver module (606): used for the output of a first prompt, wherein said first prompt is used to prompt a user to confirm whether to generate said second image for said sample to be observed; and used for the reception of a first instruction, wherein said first instruction instructs the user to confirm the generation of said second image for said sample to be observed.

Optionally, said second Acquisition module (602) comprises: an adjustment unit, used for the adjustment of parameter settings of an image generation device for each single-channel image constituting said first image based on the parameter information corresponding to said single-channel images; and an acquisition unit, used for the use of the adjusted image generation device to acquire single-channel images corresponding to said sample to be observed.

Optionally, said second Acquisition module (602) further comprises: a first determination unit, used for the determination of whether the parameter settings of said image generation device can be adjusted based on the parameter information corresponding to said single-channel images; and said adjustment unit, used for the adjustment of the parameter settings of said image generation device based on the parameter information corresponding to said single-channel images when the parameter settings of said image generation device can be adjusted.

Optionally, said second Acquisition module (602) further comprises: the output of a second prompt when the parameter settings of said image generation device cannot be adjusted, wherein the second prompt is used to indicate to a user the parameters of said image generation device that could not be automatically adjusted.

Optionally, said second prompt further comprises guidance information for guiding a user to manually adjust said parameters that could not be automatically adjusted.

Optionally, said image generation device comprises a microscope and a camera, and the parameter information comprises at least one of imaging mode, microscope parameters, and shooting parameters; and said first determination unit is used for the execution of at least one of the following: the determination of whether said microscope can be adjusted according to the microscope parameters included in said parameter information; the determination of whether the imaging mode of said microscope can be adjusted according to the imaging mode included in said parameter information; and the determination of whether said camera can be adjusted according to the shooting parameters included in said parameter information.

Optionally, said second acquisition module (602) further comprises: a receiving unit for the reception of a second instruction, wherein said second instruction indicates that the parameter settings of said image generation device have been successfully adjusted.

Optionally, said second Acquisition module (602) further comprises: determination unit, used for the determination of whether the parameter settings of said image generation device have taken effect; said second acquisition module (602) is used for the use of the adjusted image generation device to acquire the single-channel images corresponding to said sample to be observed after the parameter settings of said image generation device have taken effect.

Referring to FIG. 13, optionally, the apparatus (600) further comprises: a storage module (607), used for the storage of parameter information corresponding to said more than one single-channel image, image processing information corresponding to said second image, and image processing information corresponding to one or more single-channel images constituting said second image as the second metadata corresponding to said second image.

Some embodiments relate to a microscope. FIG. 14 shows a schematic diagram of a system (900) configured to perform the method described in the present invention. The system (900) comprises a microscope (910), a camera (920), and a computer system (930). The camera is configured to capture non-fluorescent images, and the microscope (910) is configured to acquire fluorescent images, with these being connected to the computer system (930). The computer system (930) is configured to perform at least a part of the method described in the present invention. The computer system (930) can be configured to execute machine learning algorithms. The computer system (930), the microscope (910), and the camera (920) can be separate entities, but can also be integrated into a common housing. The computer system (930) can be part of the central processing system of the microscope (910), and/or the computer system (930) and the camera (920) can be part of a sub-assembly of the microscope (910), such as a sensor, actuator, camera, or illumination unit of the microscope (910).

The computer system (930) can be a local computer device (e.g., a personal computer, laptop, tablet or mobile phone) with one or more processors and one or more storage devices, or it can also be a distributed computer system (e.g., with one or more processors and one or more storage devices distributed across various locations, such as a local client and/or one or more remote server sites and/or data centers). The computer system (930) may comprise any circuit or combination of circuits. In one embodiment, the computer system (930) may comprise one or more processors, which can be of any type. As used herein, a processor may refer to any type of computing circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), a multi-core processor, or a field programmable gate array (FPGA) of, for example, a microscope or a microscope component (e.g., a camera) or any other type of processor or processing circuit. Other types of circuits that may be included in the computer system (930) may be custom circuits or application specific integrated circuits (ASICs), such as one or more circuits (e.g., communication circuits) used in wireless devices such as mobile phones, tablets, laptops, two-way radios, and similar electronic systems. The computer system (930) may comprise one or more storage devices, which may comprise one or more storage elements suitable for a particular application, such as main memory in the form of random access memory (RAM), one or more hard disk drives, and/or one or more drives for handling removable media, such as optical discs (CDs), flash memory cards, and digital video discs (DVDs). The computer system (930) may also comprise a display device, one or more speakers, and a keyboard and/or controller, which may comprise a mouse, trackball, touch screen, voice recognition device, or any other device that allows a system user to input information to the computer system (930) or receive information from the computer system (930).

Some or all of the method steps may be performed by (or using) a hardware device (e.g., a processor, a microprocessor, a programmable computer, or an electronic circuit). In some embodiments, such a device may perform one or more of the most important steps of the method.

Depending on certain implementation requirements, embodiments of the present invention may be implemented in hardware or in software. The implementation can be carried out using a non-transitory storage medium (such as a digital storage medium, e.g., a floppy disk, DVD, Blu-ray, CD, ROM, PROM, EPROM, EEPROM, or FLASH) having electronically readable control signals stored thereon, which work in tandem (or are capable of working) with a programmable computer system so as to perform the corresponding method. Therefore, a digital storage medium may be computer-readable.

Some embodiments of the present invention comprise a data carrier having electronically readable control signals, which are capable of working in tandem with a programmable computer system so as to perform one of the methods described herein.

Generally, an embodiment of the present invention can be implemented as a computer program product with a program code, the program code being operative for performing one of the methods when the computer program product runs on a computer. The program code may for example be stored on a machine-readable carrier.

Other embodiments include a computer program for performing one of the methods described herein, stored on a machine-readable carrier.

In other words, an embodiment of the present invention is therefore a computer program having a program code for performing one of the methods described herein when the computer program runs on a computer.

Therefore, a further embodiment of the present invention is a storage medium (or a data carrier, or a computer-readable medium) on which the computer program is stored for performing one of the methods described herein when it is executed by a processor. The data carrier, digital storage medium, or recorded medium is typically tangible and/or non-transitory. A further embodiment of the present invention is an apparatus as described herein, comprising a processor and a storage medium.

Therefore, a further embodiment of the present invention is a data stream or a signal sequence representing a computer program for performing one of the methods described herein. The data stream or signal sequence may for example be configured to be transferred via a data communication connection, for example via the Internet.

A further embodiment comprises a processing means, for example a computer or a programmable logic device, which is configured or adapted to perform one of the methods described herein.

A further embodiment comprises a computer on which a computer program for performing one of the methods described herein is installed.

A further embodiment of the present invention comprises an apparatus or a system configured to transfer (e.g., electronically or optically) a computer program for performing one of the methods described herein to a receiver. The receiver may, for example, be a computer, a mobile device, or a memory device. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may work in tandem with a microprocessor in order to perform one of the methods described herein. In general, the methods are preferably performed by any hardware apparatus.

As used herein, the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Similarly, aspects described in the context of a method step also represent a description of a corresponding block or item or feature of a corresponding apparatus.

## Claims

1. , An image reproduction method, comprising:
the acquisition of the first metadata corresponding to a first image, wherein said first image is composed of more than one single-channel image, while said first metadata comprises parameter information respectively corresponding to said more than one single-channel image and image processing information corresponding to said first image;
the respective acquisition for a sample to be observed of more than one single-channel image corresponding to said sample to be observed based on the parameter information respectively corresponding to said more than one single-channel image;
the superposition of more than one single-channel image corresponding to said sample to be observed to generate a second image corresponding to said sample to be observed; and
the performance of image processing on said second image based on image processing information corresponding to said first image.

2. , The method according to Claim 1, wherein said first metadata information further comprises image processing information respectively corresponding to one or more single-channel images constituting said first image, and before synthesizing more than one single-channel image corresponding to said sample to be observed, the method further comprises:
the performance of image processing on one or more single-channel images respectively corresponding to said sample to be observed based on image processing information respectively corresponding to one or more single-channel images constituting said first image.

3. , The method according to Claims 1 or 2, said image processing comprising artificial intelligence (AI) analysis, and said image processing information comprising an AI analysis goal and information about an AI analysis tool, with the performance of image processing based on said image processing information comprising:
the acquisition of said AI analysis tool according to said information about the AI analysis tool; and
the use of said AI analysis tool to perform image processing to realize said AI analysis goal.

4. , The method according to Claim 3, wherein said AI analysis tool comprises one or more AI analysis models;
and said information about the AI analysis tool comprises at least one of the following:
information for acquiring each AI analysis model;
each AI analysis model.

5. , The method according to Claim 4, wherein said information about the AI analysis tool further comprises feature information of each AI analysis model.

6. , The method according to Claim 5, wherein said AI analysis tool comprises a plurality of AI analysis models; and after acquiring said AI analysis tool according to said information about the AI analysis tool, the method further comprises:
the determination of a target AI analysis model from said plurality of AI analysis models;
said use of said AI analysis tool to perform image processing to realize said AI analysis goal comprises:
the use of said target AI analysis model to perform image processing to realize said AI analysis goal.

7. , The method according to Claim 6, wherein said determination of a target AI analysis model from said plurality of AI analysis models comprises:
the reception of an AI analysis requirement that is input by a user; and
the determination of said target AI analysis model according to said AI analysis demand and the feature information of each AI analysis model.

8. , The method according to Claim 6, wherein said determination of a target AI analysis model from said plurality of AI analysis models comprises:
the display of information about said plurality of AI analysis models; and
the determination of the target AI analysis model from said plurality of AI analysis models based on a selection input from a user.

9. , The method according to Claim 3, said AI analysis goal comprising at least one of the following:
determination of cell confluence;
determination of cell count; or
determination of cell transfection rate.

10. . The method according to Claim 1, wherein before the respective acquisition for a sample to be observed of more than one single-channel image corresponding to said sample to be observed based on the parameter information respectively corresponding to said more than one single-channel image, and the method further comprises:
the output of a first prompt, wherein said first prompt is used to prompt a user to confirm whether to generate said second image for said sample to be observed; and
the reception of a first instruction, wherein said first instruction instruct the user to confirm the generation of said second image for said sample to be observed.

11. . The method according to Claim 1, wherein the respective acquisition for a sample to be observed of more than one single-channel image corresponding to said sample to be observed based on the parameter information respectively corresponding to said more than one single-channel image comprises:
the adjustment of parameter settings of an image generation device for each single-channel image constituting said first image based on the parameter information corresponding to said single-channel images; and
the use of the adjusted image generation device to acquire single-channel images corresponding to said sample to be observed.

12. . The method according to Claim 11, wherein before the adjustment of the parameter settings of the image generation device, the method further comprises:
the determination of whether the parameter settings of said image generation device can be adjusted based on the parameter information corresponding to said single-channel images; and
the adjustment of the parameter settings of the image generation device based on said parameter information corresponding to said single-channel images, which comprises: the determination of whether the parameter settings of said image generation device can be adjusted based on the parameter information corresponding to said single-channel images.

13. . The method according to Claim 11, wherein before the use of the adjusted image generation device to acquire single-channel images corresponding to said sample to be observed, the method further comprises:
the determination of whether the parameter settings of said image generation device have taken effect;
the use of the adjusted image generation device to acquire the single-channel images corresponding to said sample to be observed, which comprises:
the use of the adjusted image generation device to acquire the single-channel images corresponding to said sample to be observed after the parameter settings of said image generation device have taken effect.

14. . An image reproduction method, comprising:
the acquisition of the first metadata corresponding to a first image, wherein said first image is composed of more than one single-channel image, while said first metadata comprises parameter information respectively corresponding to said more than one single-channel image and image processing information respectively corresponding to one or more single-channel images constituting said first image;
the respective acquisition for a sample to be observed of more than one single-channel image corresponding to said sample to be observed based on the parameter information respectively corresponding to said more than one single-channel image;
the performance of image processing on one or more single-channel images respectively corresponding to said sample to be observed based on image processing information respectively corresponding to one or more single-channel images constituting said first image; and
the superposition of more than one single-channel image corresponding to said sample to be observed to generate a second image corresponding to said sample to be observed.

15. . The method according to Claim 14, said image processing comprising artificial intelligence (AI) analysis, and said image processing information comprising an AI analysis goal and information about an AI analysis tool, with the performance of image processing based on said image processing information comprising:
the acquisition of said AI analysis tool according to said information about the AI analysis tool; and and
the use of said AI analysis tool to perform image processing to realize said AI analysis goal.

16. . The method according to Claim 15, wherein said AI analysis tool comprises one or more AI analysis models;
and said information about the AI analysis tool comprises at least one of the following:
information for acquiring each AI analysis model;
each AI analysis model.

17. , The method according to Claim 16, wherein said information about the AI analysis tool further comprises feature information of each AI analysis model.

18. . The method according to Claim 17, wherein said AI analysis tool comprises a plurality of AI analysis models; and after acquiring said AI analysis tool according to said information about the AI analysis tool, the method further comprises:
the determination of a target AI analysis model from said plurality of AI analysis models;
said use of said AI analysis tool to perform image processing to realize said AI analysis goal comprises:
the use of said target AI analysis model to perform image processing to realize said AI analysis goal.

19. . The method according to Claim 18, wherein said determination of a target AI analysis model from said plurality of AI analysis models comprises:
the reception of an AI analysis requirement that is input by a user; and
the determination of said target AI analysis model according to said AI analysis demand and the feature information of each AI analysis model.

20. , The method according to Claim 18, wherein said determination of a target AI analysis model from said plurality of AI analysis models comprises:
the display of information about said plurality of AI analysis models; and
the determination of the target AI analysis model from said plurality of AI analysis models based on a selection input from a user.

21. . An image reproduction apparatus, comprising:
a first acquisition module, used for the acquisition of the first metadata corresponding to a first image, wherein said first image is composed of more than one single-channel image, while said first metadata comprises parameter information respectively corresponding to said more than one single-channel image and image processing information corresponding to said first image;
a second acquisition module, used for the respective acquisition for a sample to be observed of more than one single-channel image corresponding to said sample to be observed based on the parameter information respectively corresponding to said more than one single-channel image;
a generation module, used for the superposition of more than one single-channel image corresponding to said sample to be observed to generate a second image corresponding to said sample to be observed; and
a processing module, used for the performance of image processing on said second image based on said image processing information.

22. . An image reproduction apparatus, comprising:
a first acquisition module, used for the acquisition of the first metadata corresponding to a first image, wherein said first image is composed of more than one single-channel image, while said first metadata comprises parameter information respectively corresponding to said more than one single-channel image and image processing information corresponding to said first image; parameter information and image processing information respectively corresponding to one or more single-channel images constituting said first image;
a second acquisition module, used for the respective acquisition for a sample to be observed of more than one single-channel image corresponding to said sample to be observed based on the parameter information respectively corresponding to said more than one single-channel image;
a processing module, used for the performance of image processing on one or more single-channel images respectively corresponding to said sample to be observed based on image processing information respectively corresponding to the one or more single-channel images constituting said first image; and
a generation module, used for the superposition of more than one single-channel image corresponding to said sample to be observed to generate a second image corresponding to said sample to be observed; and a second image corresponding to the sample to be observed.

23. . An image reproduction apparatus, comprising:
a processor;
a memory, used for the storage of instructions executable by the processor;
wherein, when the instructions are executed by the processor, the processor is used to perform the method according to any one of Claims 1-13 or any one of Claims 14-20.

24. . A computer-readable storage medium, with instructions being stored thereon, and when the instructions are executed by a processor, said processor is used to perform the method according to any one of Claims 1-13 or any one of Claims 14-20.
